# EUROPÄISCHE PATENTSCHRIFT

(11) **EP 2 908 005 B1**
(45) Veröffentlichungstag und Bekanntmachung des Hinweises auf die Patenterteilung: **29.11.2017**
(21) Anmeldenummer: 14178294.6
(22) Anmeldetag: 24.07.2014
(51) Int. Cl.: F03D 7/06, F03D 3/06

(54) **Vertikal-Windgenerator**
Vertical wind generator
Éolienne verticale

(30) Priorität: 14.02.2014 DE 102014002078
(43) Veröffentlichungstag der Anmeldung: 19.08.2015
(73) Patentinhaber: Rath, Thorsten, 88690 Uhldingen-Muehlhofen (DE)
(72) Erfinder: Rath, Siegfried Franz, 86753 Möttingen-Kleinsorheim (DE)
(74) Vertreter: Vossius & Partner Patentanwälte Rechtsanwälte mbB

(56) Entgegenhaltungen:
- EP-A1- 0 115 767
- EP-A2- 2 623 774
- DE-A1-102009 050 577
- DE-U1- 29 804 581
- KR-A- 20120 041 722

## Beschreibung

Die Erfindung betrifft einen Vertikal-Windgenerator.

Windgeneratoren bzw. Windkraftanlagen werden beispielsweise zur Stromerzeugung eingesetzt. Dabei wird der Wind geerntet. Es werden grundsätzlich zwei verschiedene Arten von Windgeneratoren unterschieden, zum einen die sogenannten Vertikal-Windgeneratoren und zum anderen Windgeneratoren, bei denen ein Rotor um eine horizontale Achse rotiert. Bei den horizontal rotierenden Windgeneratoren kommt meist ein sternförmiger Rotor zum Einsatz, der Rotor hat dabei meist drei Blätter bzw. Flügel. Die Vertikal-Windgeneratoren weisen eine vertikale Rotationsachse auf und werden unter anderem auch als Darrieus-Rotoren bezeichnet. Eine Ausführungsvariante der Vertikal-Windgeneratoren stellt dabei der sogenannte H-Darrieus-Rotor dar. Vertikale Windgeneratoren, auch Vertikal-Achs-Windturbinen (VAWT) genannt, sind normalerweise unabhängig von der Windrichtung, d. h. sie benötigen keine Windrichtungsnachführung oder ähnliche Einrichtungen. Solche Nachführungseinrichtungen bestehen beispielsweise aus zusätzlichen Motoren in Verbindung mit Getrieben, Lagern oder Sensoren.

Im Stand der Technik sind sowohl Vertikal- als auch Horizontal-Windgeneratoren grundsätzlich bekannt, sowohl die Horizontal- auch als die Vertikal-Windgeneratoren verfügen über Rotoren bzw. Rotorblätter bzw. Flügel, die eine konstante Flügelfläche aufweisen. Windgeneratoren mit konstanter Flügelfläche sind auf spezielle Windgeschwindigkeiten ausgelegt, d. h. sie haben einen optimalen Wirkungsgrad bei nur einer Windgeschwindigkeit bzw. in einem bestimmten Windgeschwindigkeitsbereich. Bei Geschwindigkeiten, die nicht im und nahe am Optimum der Windgeschwindigkeit liegen, also bei niedrigeren oder bei höheren Windgeschwindigkeiten, ist der Wirkungsgrad solcher Windgeneratoren mit gleichbleibender Flügelfläche nicht optimal.

Beispielsweise ist bei Vertikal-Windgeneratoren insbesondere der Anlauf des Windgenerators bei niedrigen Windgeschwindigkeiten schwierig, da die Flügelfläche zu gering ist, d. h. sie benötigen eventuell einen zusätzlichen Anlaufmotor. Bei Horizontal-Windgeneratoren besteht beispielsweise bei hohen Windgeschwindigkeiten die Veranlassung, diese aus der optimalen Windrichtung herauszudrehen, beispielsweise ebenfalls mit einem Hilfsmotor, da die Rotationsgeschwindigkeit bzw. die Drehzahl des Rotors zu groß wird und somit beispielsweise die Gefahr einer Überhitzung besteht.
Aus der Offenlegungsschrift DE 44 34 764 A1 geht eine Darrieus-Windkraftanlage mit zwei rotationssymmetrisch angeordneten, untereinander und zu einer Drehachse parallel verlaufenden Rotorblättern mit Tragflügelprofil hervor, wobei an einem Ende eines jeden Rotorblatts eine ausschwenkbare Starthilfeklappe angeordnet ist. Die an einer Querseite der Rotorblätter vorgesehenen Startklappen sollen eine Anlaufhilfe für die Windkraftanlage darstellen. Die Starthilfeklappen sind von der Fläche relativ klein und haben somit einen relativ geringen Effekt. Diese Starthilfeklappen sind nur während des Anlaufs der Vertikal-Windkraftanlage aktiv. Zudem erscheint an dieser Konstruktion nachteilig, dass die Starthilfeklappen die aerodynamischen Eigenschaften der Rotorblätter negativ beeinflussen, insbesondere können nachteilige Wirbel an den Rändern der Tragflügel bzw. der Rotorblätter entstehen.

Weiterhin offenbaren auch KR 2012 0041722 A und DE 10 2009 050577 A Vertikal-Windgeneratoren nach dem Stand der Technik.

Es ist daher eine Aufgabe der vorliegenden Erfindung, einen verbesserten Vertikal-Windgenerator bereitzustellen und die Nachteile der im Stand der Technik bereits bekannten Windgeneratoren zu überwinden.
Die Aufgabe wird erfindungsgemäß durch einen Vertikal-Windgenerator bzw. eine Vertikal-Windkraftanlage gemäß Anspruch 1 gelöst. Bevorzugte Ausführungsformen sind in den abhängigen Ansprüchen beschrieben. Demnach verfügt der erfindungsgemäße Vertikal-Windgenerator über mindestens zwei Flügel, die bezüglich einer zentralen vertikalen Drehachse drehbar gelagert sind, wobei die Flügel jeweils einen Hauptflügel mit einer Längsseite und einen an der Längsseite des Hauptflügels angebrachten Vorflügel aufweisen, wobei der Vorflügel jeweils in Bezug auf den Hauptflügel zwischen einer ersten und einer zweiten Position beweglich ist, wobei der Vertikal-Windgenerator einen mechanischen, automatischen Mechanismus aufweist, der dazu geeignet ist, die Vorflügel in Bezug auf die Hauptflügel zwischen der ersten und der zweiten Position zu bewegen, wobei der Mechanismus dazu ausgelegt ist, die Vorflügel in Abhängigkeit von der Winkelgeschwindigkeit der Flügel bei steigenden Windgeschwindigkeiten auf den Hauptflügel zuzubewegen und bei abnehmenden Windgeschwindigkeiten vom Hauptflügel weg zu bewegen. Unter dem Begriff "Längsseite" wird im Kontext der vorliegenden Erfindung jede Seite bzw. jeder Abschnitt des Hauptflügels verstanden, die sich entlang der Länge des Flügels erstreckt. Im Falle eines vertikal ausgerichteten Flügels weisen die Längsseiten radial nach außen bzw. nach innen sowie in Drehrichtung nach vorne bzw. nach hinten. Im Falle eines radial von der vertikalen Drehachse nach außen ausgerichteten Flügels weisen die Längsseiten nach oben bzw. nach unten sowie in Drehrichtung nach vorne bzw. nach hinten. Besonders bevorzugt ist der Vorflügel an der in Drehrichtung nach vorne ausgerichteten Längsseite angebracht. Es ist ferner bevorzugt, dass der Vorflügel an einer nach außen, nach oben oder nach unten ausgerichteten Längsseite angebracht ist. Es können auch mehrere Vorflügel an derselben oder an unterschiedlichen Längsseiten vorgesehen sein.
Der Vertikal-Windgenerator verfügt über mindestens zwei Flügel, deren Profil im Querschnitt vorzugsweise asymmetrisch ausgebildet ist, beispielsweise ähnlich einem Tragflächenprofil. Der asymmetrische Flügel weist bevorzugt einen Querschnitt auf, dessen Breite von der einen zur anderen Seite hin kontinuierlich abnimmt. Bevorzugt ist das Querschnittsprofil tropfenförmig mit einer breiteren, abgerundeten Seite und einer schmaleren spitz bzw. keilförmig zulaufenden gegenüberliegenden Seite.
Die durch Wind in Bewegung versetzten Flügel versetzen wiederum eine zentrale Welle, die sich um eine vertikale zentrale Drehachse dreht, in Rotation. Die vertikale zentrale Welle ist üblicherweise mit einem Generator, der zur Stromgewinnung dient, verbunden. Die Flügel sind vorzugsweise symmetrisch angeordnet. Beispielsweise können zwei, vier oder sechs Flügel derart paarweise angeordnet sein, dass sich jeweils zwei Flügel (bzw. Halbflüge) gegenüberstehen.

Bevorzugt sind drei Flügel derart angeordnet, dass sie jeweils paarweise einen Winkel von 120° einschließen. Die Welle treibt üblicherweise einen Generator zur Stromgewinnung an. In dem Generator wird in der üblichen Weise mechanische (Rotations-) Energie in elektrische Energie umgewandelt. Der Generator ist üblicherweise direkt mit der zentralen Welle des Windgenerators gekoppelt, es kann jedoch auch ein Getriebe zwischen dem Generator und der zentralen Welle vorgesehen sein. Zudem kann der Vertikal-Windgenerator auch über ein Bremssystem und eine Notabschaltung verfügen, wie dies aus dem Stand der Technik bekannt ist.

Die Flügel des Vertikal-Windgenerators unterteilen sich erfindungsgemäß in einen Hauptflügel und einen Vorflügel. Der Hauptflügel und der Vorflügel werden dabei bevorzugt aus zwei separaten Teilen gebildet, die miteinander verbunden sind. Der Vorflügel ist vorzugsweise in Form und Dimensionen an die Kontur des Hauptflügels angepasst. Die Flügel weisen jeweils einen Hauptflügel mit mehreren Längsseiten und mindestens einen an mindestens einer der Längsseiten des Hauptflügels angebrachten bzw. montierten Vorflügel auf. Auch wenn im streng geometrischen Sinne der Hauptflügel je nach Flügelprofil mehr oder weniger als vier Längsseiten aufweisen kann (z.B. bei einem tropfenförmigen Flügelquerschnitt), so soll im Kontext der vorliegenden Erfindung der Begriff "Längsseite" jeden sich in Längsrichtung erstreckenden Abschnitt der Flügels bezeichnen, der im Wesentlichen in eine bestimmte Richtung ausgerichtet ist, und auch eine Längskante im geometrischen Sinne mit umfassen. Im Falle eines vertikal ausgerichteten Flügels weisen die Längsseiten radial nach außen bzw. nach innen sowie in Drehrichtung nach vorne bzw. nach hinten. Im Falle eines radial von der vertikalen Drehachse nach außen ausgerichteten Flügels weisen die Längsseiten nach oben bzw. nach unten sowie in Drehrichtung nach vorne bzw. nach hinten. Besonders bevorzugt ist der Vorflügel an der in Drehrichtung nach vorne ausgerichteten Längsseite angebracht. Es ist ferner bevorzugt, dass der Vorflügel an einer nach außen, nach oben oder nach unten ausgerichteten Längsseite angebracht ist. Es können auch mehrere Vorflügel an derselben oder an unterschiedlichen Längsseiten vorgesehen sein.

Im Falle eines asymmetrischen Querschnittsprofils des Hauptflügel weist der Hauptflügel eine erste Längsseite bzw. Längskante auf, die an dem breiteren, abgerundeten Ende des Querschnittsprofils vorgesehen ist, das in Drehrichtung nach vorne ausgerichtet ist, und eine zweite Längsseite bzw. Längskante auf, die an dem schmaleren, spitzen Ende des Querschnittsprofils vorgesehen ist. Bevorzugt ist der Vorflügel an der ersten Längsseite angebracht. Ferner weist der Hauptflügel im Falle eines vertikal ausgerichteten Flügels üblicherweise eine dritte nach außen ausgerichtete Längsseite und eine vierte nach innen gerichtete Längsseite auf. Im Falle eines radial von der vertikalen Drehachse nach außen ausgerichteten Flügels weisen die dritte und vierte Längsseite in der Regel nach oben bzw. unten. Es ist ferner bevorzugt, dass ein Vorflügel an der dritten Längsseite angebracht ist.

Der Vorflügel kann auch beweglich in den Hauptflügel integriert sein. Bevorzugt weist der Vorflügel an der dem Hauptflügel zugewandten Seite eine ähnliche Außengeometrie auf wie der Hauptflügel bzw. sind die Außenoberflächen in ihrer Form aneinander angepasst. Der in Relation zum Hauptflügel bewegliche Vorflügel ist vorzugsweise in der dem Wind zugewandten Richtung des Hauptflügels vor bzw. an diesem angeordnet.

Der Vorflügel kann sich in Bezug auf den Hauptflügel zwischen einer ersten und einer zweiten Position, bevorzugt selbsttätig, bewegen. Bei der Bewegung des Vorflügels relativ zum Hauptflügel verringert sich bevorzugt der Abstand vom Vorflügel zum Hauptflügel. Bei einer Bewegung von einer ersten zu einer zweien Position fährt der Vorflügel auf den Hauptflügel zu und/oder ein Teil des Vorflügels in den Hauptflügel hinein, d. h. die innere Kontur des Vorflügels legt sich vorteilhaft formschlüssig an den Hauptflügel an. Die innere Kontur des Vorflügels ist vorteilhaft an die äußere Kontur des Hauptflügels angepasst, d.h. die innere Kontur verfügt im Wesentlichen über eine ähnliche Krümmung wie die Außenkontur des Hauptflügels. In einer weiteren vorteilhaften Ausführungsform ist der Verlauf der Außenkontur des Hauptflügels im Wesentlichen identisch dem Verlauf der inneren Kontur des Vorflügels. Der Vorflügel kann dabei in der zweiten Position vollständig in den Hauptflügel integriert sein bzw. in eine im Hauptflügel vorgesehene Öffnung aufgenommen sein.

Bei einer Bewegung von einer zweiten Position des Vorflügels in eine erste Position des Vorflügels relativ zum Hauptflügel, vergrößert sich entsprechend der Abstand zwischen Vorflügel und Hauptflügel. Eine Bewegung zwischen der ersten und der zweiten Position kann vorteilhaft auch während der Drehung des Windgenerators, d.h. im Betrieb erfolgen. Durch die Veränderung der Position des ersten Vorflügels in Relation zum Hauptflügel ändert sich vorteilhaft der Strömungswiderstand des Flügels. Der Strömungswiderstand ist vorteilhaft bei niedrigen Geschwindigkeiten relativ hoch, um der Luft möglichst viel Widerstand entgegenzubringen und um bei niedrigeren Windgeschwindigkeiten anlaufen zu können. Der Strömungswiderstand der Flügel ist vorteilhaft bei höheren Windgeschwindigkeiten niedriger, um zu hohe Drehzahlen des Vertikal-Windgenerators möglichst nicht zu überschreiten. Weiterhin ist es vorteilhaft, dass sich der Vorflügel bei höheren Geschwindigkeiten in einer weiter eingefahrenen Position oder ganz eingefahrenen Position befindet, da so höhere Drehgeschwindigkeiten erreicht werden, ohne den Windgenerator zu bremsen, dies kann beispielsweise nach dem Anlaufen des Windgenerators vorteilhaft sein.

In einer bevorzugten Ausführungsform verfügt der Vertikal-Windgenerator über einen Vorflügel, der sich über mindestens 50%, bevorzugt mindestens 70% und besonders bevorzugt mindestens 90% der Länge der Längsseite des Hauptflügels erstreckt. Dadurch lässt sich vorteilhaft ein Vorflügel mit einer großen Fläche in die Kontur des Flügels integrieren. Ein Vorflügel, der sich im Wesentlichen über die gesamte Länge des Hauptflügels erstreckt, ist besonders vorteilhaft im Falle eines Vorflügels, der an der in Drehrichtung nach vorne ausgerichteten Längsseite angebracht ist. Ist der Vorflügel an einer radial nach außen gerichteten Längsseite angebracht, so kann es im Hinblick auf eine optimierte Stabilität bevorzugt sein, dass sich der Vorflügel über lediglich 10% bis 60%, bevorzugt über 30% bis 50% der Länge der Längsseite des Hauptflügels erstreckt.

Bevorzugt verfügt der Vertikal-Windgenerator über einen Mechanismus, der den Vorflügel in Bezug auf den Hauptflügel zwischen einer ersten und einer zweiten Position bewegen kann. Vorteilhaft ist der Vertikal-Windgenerator mit einem Mechanismus ausgestattet, der die Vorflügel in Bezug auf die Hauptflügel zwischen einer ersten und einer zweiten Position bewegt. Der Mechanismus ist vorteilhaft ein rein mechanischer, selbsttätiger Mechanismus. Der Mechanismus kann auch vorteilhaft ein elektrischer bzw. elektromechanischer Mechanismus sein. Bei einem selbsttätigen mechanischen Mechanismus wird vorteilhaft kein zusätzlicher Aktor benötigt wie beispielsweise bei einem elektrischen Mechanismus.

Bevorzugt weist der Vertikal-Windgenerator einen Mechanismus auf, der dazu ausgelegt ist, die Vorflügel bei steigenden Windgeschwindigkeiten automatisch auf den Hauptflügel zuzubewegen und bei abnehmenden Windgeschwindigkeiten automatisch vom Hauptflügel wegzubewegen. Der Mechanismus bewegt dabei den Vorflügel relativ zum Hauptflügel, d. h. bei steigenden Windgeschwindigkeiten bewegt sich der Vorflügel auf den Hauptflügel zu und der Abstand zwischen diesen wird verkleinert bzw. verringert. Der Abstand zwischen Hauptflügel und Vorflügel kann dabei in einem senkrechten Querschnitt durch den Hauptflügel und den Vorflügel gemessen werden. Bei sehr niedrigen Windgeschwindigkeiten befindet sich der Vorflügel in einer ersten Position, d. h. er ist sozusagen komplett ausgefahren. Bei sehr hohen Windgeschwindigkeiten befindet sich der Vorflügel relativ zum Hauptflügel gesehen in der zweiten Position, das bedeutet er ist komplett eingefahren.

Bevorzugt erfolgt die Bewegung zwischen der ersten und der zweiten Position kontinuierlich. Eine kontinuierliche Bewegung bedeutet, dass eine gleichmäßige Bewegung relativ zur zunehmenden oder abnehmenden Windgeschwindigkeit erfolgt. Die Bewegung erfolgt dabei nicht ruckartig oder in diskreten Schritten.

Die Vorflügel können bevorzugt in Abhängigkeit von der Windgeschwindigkeit verschiedene Zwischenpositionen einnehmen. Die Zwischenpositionen liegen dabei zwischen der ersten und der zweiten Position, d. h. zwischen vollausgefahrenem Vorflügel und komplett eingezogenem Vorflügel. Es kann auch vorteilhaft sein, verschiedene Rastpositionen zwischen der ersten und der zweiten Position vorzusehen, in welche ein Verstellmechanismus den Vorflügel verstellen kann. Der Verstellmechanismus weist vorzugsweise mindestens eine Zwischen- bzw. Rastposition auf.

Bevorzugt weist eine Ausführungsform des Vertikal-Windgenerators einen Mechanismus mit einem Elektromotor auf. Der Elektromotor ist dazu geeignet, den Vorflügel in Bezug auf den Hauptflügel aktiv zwischen einer ersten und einer zweiten Position zu bewegen. Der Elektromotor kann dabei vorteilhaft über ein Verbindungselement mit dem Vorflügel verbunden sein. Das Verbindungselement kann vorteilhaft ein Zahnriemen, eine Kette oder ein Seil sein. Das Verbindungselement kann über eine Umlenkeinrichtung umgelenkt werden. Die Umlenkeinrichtung kann dabei vorteilhaft je nach gewähltem Verbindungselement eine Riemenscheibe, ein Ritzel oder eine Rolle sein. In einer besonders bevorzugten Ausführungsvariante erfolgt die Umlenkung um 90°.

Bei einer weiteren Ausführungsform des Vertikal-Windgenerators weist der Mechanismus einen Elektromotor und eine Steuerung auf. Die Steuerung ist dazu geeignet, anhand von erfassten Winddaten die Vorflügel in Bezug auf den Hauptflügel zwischen einer ersten und einer zweiten Position zu bewegen. Die erfassten Daten können vorteilhaft von einem Sensor, der in den Vertikal-Windgenerator integriert ist, erfasst bzw. gemessen werden. Es ist auch möglich, dass der Windgenerator eine Steuerung aufweist, die mittels übermittelten Winddaten die Vorflügel in Bezug auf den Hauptflügel bewegt. Übermittelte Winddaten können beispielsweise über einen Internetanschluss zur Verfügung gestellt werden.

In einer weiteren besonders bevorzugten Ausführungsform weist der Vertikal-Windgenerator einen mechanischen, automatischen Mechanismus auf, der dazu geeignet ist, die Vorflügel in Abhängigkeit von der Windgeschwindigkeit der Vorflügel zwischen der ersten und der zweiten Position zu bewegen. Der mechanische Mechanismus verstellt die Position des Vorflügels in Relation zum Hauptflügel anhand der Windgeschwindigkeit. Die Verstellung des Vorflügels durch den mechanischen Mechanismus erfolgt ohne zusätzliche Hilfsmittel bzw. zusätzliche Aggregate.

Der mechanische automatische Mechanismus beruht besonders bevorzugt auf Fliehkraft. Die Verstellung des Vorflügels in Bezug auf den Hauptflügel erfolgt dabei durch die Fliehkraft, die aufgrund der Rotation des Flügels entsteht.

Die Fliehkraft bzw. die Zentrifugalkraft wird durch die Trägheit beispielsweise eines Gegengewichtes bei der Rotation des Windgenerators um die zentrale vertikale Drehachse verursacht. Das Gegengewicht ist bevorzugt ungefähr orthogonal zur Drehachse beweglich gelagert, das heißt, es kann sich bevorzugt entlang der Richtung vor und zurück bewegen, in der die Zentrifugalkraft wirkt. Die Bewegung des Vorflügels gegenüber dem Hauptflügel erfolgt dabei bevorzugt entlang einer Richtung senkrecht auf die Zentrifugalkraft. Das Gegengewicht kann in einem um die zentrale vertikale Drehachse rotierenden Abschnitt des Windgenerators beweglich gelagert sein und beispielsweise über ein zentrales Verbindungselement wie beispielsweise einen Zahnriemen, eine Kette oder ein Seil mit dem korrespondierenden Vorflügel verbunden sein. Das Verbindungselement wiederum kann über eine Umlenkeinrichtung umgelenkt werden. Die Umlenkeinrichtung kann dabei eine Riemenscheibe oder einen Ritzel oder eine Rolle sein. Vorteilhaft sind die Riemenscheibe, das Ritzel oder die Rolle gelagert. Die Umlenkung kann um einen beliebigen Winkel erfolgen, eine vorteilhafte Ausführung ist eine Umlenkung um 90°. Vorteilhaft sind die Gesamtflügel über ein Gestänge mit der vertikalen zentralen Drehachse verbunden. Das Gestänge weist bevorzugt mindestens einen Hohlraum zur beweglichen Lagerung mindestens eines Gegengewichts auf. Bevorzugt ist ein solcher Hohlraum für jeden der Vorflügel vorgesehen. Bevorzugt weist das Gestänge ein oder mehrere Rohre auf. Das oder die Gegengewicht(e) des mechanischen Mechanismus kann/können in einem solchen Rohr des Gestänges untergebracht sein.

In einer weiteren besonders bevorzugten Ausbildungsform ist der Vorflügel über eine zusätzliche Druckfeder vorgespannt. Die Druckfeder befindet sich vorteilhaft in einem Gehäuse, das in dem Hauptflügel integriert ist. Die Druckfeder hält den Vorflügel in der ausgefahrenen Position. Der Vorflügel steht bevorzugt wiederum über ein Verbindungselement, beispielsweise ein Seil mit dem Gegengewicht in Verbindung. Das Gegengewicht kann mit einer Zugfeder verbunden sein. Der Mechanismus besteht vorteilhaft aus einer Zugfeder, die an einem feststehenden Rohr befestigt ist, wobei das Gegengewicht in dem feststehenden Rohr beweglich ist, das Gegengewicht wiederum ist mit einem Verbindungselement mit dem Vorflügel verbunden, dieser wird mit der Druckfeder in einer Position gehalten, das ganze System bildet sozusagen ein Gleichgewicht zwischen der Zugfeder und der Druckfeder aus.

Die Druckfeder hält den Vorflügel bevorzugt in einer ersten Position. Die erste Position entspricht der ausgefahrenen Position. In der ausgefahrenen Position weist der Gesamtflügel bestehend aus Hauptflügel und Vorflügel die größte (Ober-)Fläche auf. Die größte Fläche ist für niedrige Windgeschwindigkeiten geeignet. In der zweiten Position ist der Vorflügel eingefahren. In der eingefahrenen Position ist die (Ober-)Fläche des Flügels, der aus Vorflügel und Hauptflügel besteht, am kleinsten. Der Abstand zwischen Hauptflügel und Vorflügel bestimmt die Gesamt(ober)fläche des Flügels.

In einer weiteren besonders bevorzugten Ausführungsform der vorliegenden Erfindung befindet sich das Gegengewicht im Flügel selbst. D. h. das Gegengewicht ist im Flügel integriert. Durch die Integration des Gegengewichts in den Flügel kann Bauraum eingespart werden.

Für Wartungszwecke kann es vorteilhaft sein, Öffnungen im Flügel vorzusehen, um den Mechanismus zu überprüfen oder eventuell Teile des Mechanismus auszutauschen.

Die oben beschriebenen Ausführungsformen der Flügel sind auch für Windkraftanlagen mit einer horizontalen oder anders ausgerichteten Drehachse geeignet. Ein solcher Windgenerator weist mindestens zwei Flügel auf, die bezüglich einer zentralen Drehachse drehbar gelagert sind, wobei die Flügel jeweils einen Hauptflügel mit einer Längsseite und einen an der Längsseite des Hauptflügels angebrachten Vorflügel aufweisen, wobei der Vorflügel jeweils in Bezug auf den Hauptflügel zwischen einer ersten und einer zweiten Position beweglich ist. Die oben beschriebenen Merkmale können entsprechend der Beschreibung für einen Vertikal-Windgenerator übertragen und beliebig miteinander kombiniert werden.

Die Vorteile der oben beschriebenen Erfindung liegen unter anderem in der Anordnung der Vorflügel an der Längskante bzw. -seite der Hauptflügel. Durch diese vorteilhafte Anordnung lassen sich Vorflügel mit einer großen Fläche nahezu ohne Störkonturen am Flügel anordnen, sodass sowohl bei eingefahrenem als auch bei ausgefahrenem Vorflügel optimale aerodynamische Eigenschaften vorliegen. Besonders vorteilhaft ist ferner der selbsttätige mechanische Mechanismus, der keinerlei Motoren oder dergleichen bedarf und stattdessen die Einstellung des Vorflügels automatisch in Abhängigkeit von der aktuellen Windgeschwindigkeit, beispielsweise basierend auf dem Prinzip der Fliehkraft, sicherstellt. Dies sorgt für einen relativ einfachen und kostengünstigen Mechanismus, der zudem wartungsarm ist.

Nachfolgend werden bevorzugte Ausführungsformen der vorliegenden Erfindung anhand der Figuren näher beschrieben. Es zeigen:
Fig. 1 einen Vertikal-Windgenerator gemäß Stand der Technik in Vorderansicht;
Fig. 2 eine Schnittansicht einer bevorzugten Ausführungsform eines erfindungsgemäßen Vertikal-Windgenerators;
Fig. 3a eine Schnittansicht einer weiteren bevorzugten Ausführungsform eines erfindungsgemäßen Vertikal-Windgenerators;
Fig. 3b eine schematische Ansicht zur Verdeutlichung des Schnitts in Fig. 3a; und
Fig. 4 eine schematische Schnittansicht einer weiteren bevorzugten Ausführungsform eines erfindungsgemäßen Vertikal-Windgenerators.

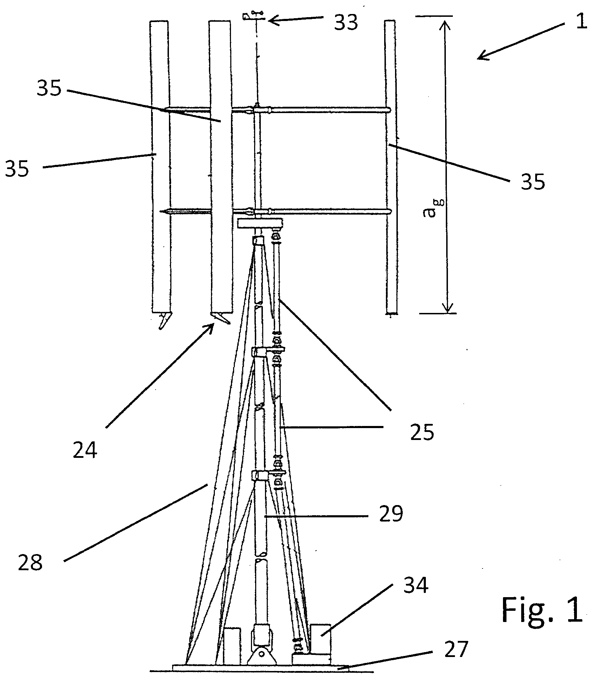

Figur 1 zeigt den generellen Aufbau eines aus dem Stand der Technik bekannten, gattungsgemäßen Vertikal-Windgenerators gemäß Figur 1 der DE 44 343 764 A1. Der Vertikal-Windgenerator 1 weist drei Flügel oder Rotorblätter 35 auf, die sich um eine zentrale vertikale Teleskopwelle 29 drehen können. Üblicherweise wird bei solchen Vertikal-Windgeneratoren noch ein Stromaggregat 34 zur Stromerzeugung angeschlossen. Das Stromaggregat 34 bzw. der Stromgenerator ist z.B. über ein Übersetzungsgetriebe mit den Flügeln gekoppelt. Bei der Vertikal-Windkraftanlage 1 kann es vorgesehen sein, diese mittels einer zentralen vertikalen Teleskopwelle 29 in der Höhe anzupassen, hierzu sind die Gelenkwellen 25 vorgesehen. Der Vertikal-Windgenerator 1 steht auf einer Fundamentplatte 27. Weiterhin sind in der Figur 1 noch Seilabspannungen 28 zur Sicherung der Vertikal-Windkraftanlage 1 dargestellt. An den unteren Enden der Rotorblätter bzw. Flügel 35 sind Starthilfeklappen 24 vorgesehen. Ferner ist ein Windmesser bzw. Anemometer 33 gezeigt. Die Gesamtlänge eines Flügels wird mit a_{g} bezeichnet.

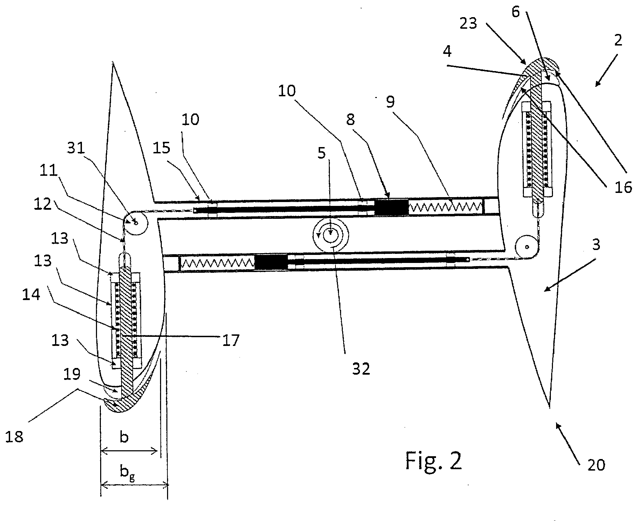

Figur 2 zeigt schematisch den Aufbau einer bevorzugten Ausführungsform eines Doppel-Flügels für den erfindungsgemäßen Vertikal-Windgenerator 1, dessen beide Flügel 2 jeweils einen Hauptflügel 3 und einen Vorflügel 4 aufweisen. Dieser Doppelflügel dreht sich um eine zentrale vertikale Welle 22, ähnlich der zentralen vertikalen Teleskopwelle 29 in Figur 1.

Die Drehrichtung der Flügel 2 um die Welle 22 wird durch den Pfeil 32 angezeigt. Die Rotation erfolgt demnach derart, dass die abgerundete Seite 23 des ungefähr tropfenförmigen Profils der Flügel 2 nach vorne weist. Der Hauptflügel 3 liegt in Drehrichtung gesehen entsprechend hinter dem Vorflügel 4.

Am (in Drehrichtung) vorderen Ende des Hauptflügels 3 befindet sich eine erste Längsseite 6 des Hauptflügels 3. Die erste Längsseite 6 erstreckt sich entlang des gesamten Hauptflügels 3 (mit Bezug auf Figur 1 von oben nach unten entlang des Flügels 35). Die zweite Längsseite 20 des Hauptflügels 3 befindet sich gegenüber der ersten Längsseite 6 des Hauptflügels 3 und läuft bevorzugt spitz zu. Der Hauptflügel 3 und der Vorflügel 4 sind vorzugsweise aus dem gleichen Material gefertigt. Das Material für den Flügel ist vorzugsweise ein Kunststoff. Die aus Hauptflügel 3 und Vorflügel 4 zusammengesetzten Flügel 2 können aber auch aus zusammengesetzten Metallblechen bestehen. [
Wie in Figur 2 ebenfalls dargestellt, ist die Kontur des Vorflügels 4 bevorzugt an die Kontur des Hauptflügels 3 angepasst, d. h. entlang der ersten Längsseite 6 des Hauptflügels 3 ist die Innenseite 16 des Vorflügels 4 an die äußere Kontur des Hauptflügels 3 angepasst. Der Vorflügel 4 weist an seiner äußeren Längsseite 23, die dem Hauptflügel 3 abgewandt ist, bevorzugt eine ähnlich verlaufende Kontur wie der Hauptflügel 3 auf. Die Kontur geht in einer eingefahren Position 19 (nicht schraffierte Darstellung, linke Seite von Figur 2) des Vorflügels 4 im Wesentlichen fließend in die Kontur des Hauptflügels 3 über. Der Vorflügel 4 erstreckt sich entlang der ersten Längsseite 6 (vertikal zur Zeichenebene) bevorzugt über einen Großteil der Länge des Hauptflügels 3 bzw. der ersten Längsseite 6 des Hauptflügels 3.

Ferner zeigt Figur 2 ein direkt in den Vorflügel 4 integriertes Bauteil 17, welches mit einem Mechanismus zusammen wirkt. Das Bauteil 17 kann zur Führung des Vorflügels 4 im Hauptflügel 3 vorgesehen sein und daher auch als Führungselement 17 bezeichnet werden. Das Bauteil 17 kann integral mit dem Vorflügel 4 ausgebildet sein oder auch als separates Teil ausgebildet sein und entsprechend mit Schrauben, Nieten oder durch Kleben mit dem Vorflügel 4 verbunden werden.

Der dargestellte Mechanismus besteht im Wesentlichen aus einer Zugfeder 9, einem Gegengewicht 8, einem Verbindungselement 12, einem Verbindungselement 12, einer Umlenkeinrichtung 11, einer Druckfeder 14 und dem Vorflügel 4. Die Zugfeder 9 ist bevorzugt an dem Gegengewicht 8 befestigt.. Die Zugfeder 9 kann durch ein beliebiges elastisches Element ersetzt werden beispielsweise einen Gummizug oder dergleichen. Der dargestellte Mechanismus beinhaltet zudem noch eine Druckfeder 14. Die Druckfeder 14 kann durch Elemente ersetzt werden, die ähnliche mechanische Eigenschaften aufweisen - Kraftaufbau durch Kompression, gespeicherte Energie wird beim Entspannen wieder freigegeben - z.B. eine Gasdruckfeder oder ein elastisches Element. Wie ebenfalls in Figur 2 dargestellt, kann es bei diesem mechanischen Mechanismus vorgesehen sein, dass der Vorflügel 4 mittels der Druckfeder 14 in der ausgefahrenen Position 18 (schraffierte Darstellung des Vorflügels 4) gehalten wird. Die Druckfeder 14 ist in diesem Ausführungsbeispiel in einem Gehäuse 13 gelagert. Das Gehäuse 13 ist vorzugsweise integral mit dem Hauptflügel 3 ausgebildet oder als separates Element im Hauptflügel 3 fixiert bzw. stütz sich gegenüber diesem ab. Die Druckfeder 14 steht mittels eines weiteren Verbindungselements beispielsweise einem vorstehenden Nocken, einem Bolzen oder einem Wellenabsatz mit dem Vorflügel 4 bzw. mit dem Führungselement 17 des Vorflügels 4 in Kontakt. Dadurch kann die Federkraft der Druckfeder 14 direkt auf den Vorflügel bzw. dessen Führungselement 17 wirken. Die verschiedenen Komponenten des Mechanismus werden entsprechend der vorherrschenden Kräfte, der Dimensionen des Flügels bzw. der üblicherweise auftretenden Windgeschwindigkeiten ausgelegt.

Weiterhin kann zu dem Mechanismus ein Verbindungselement 12 gehören, welches das Gegengewicht 8 mit dem Vorflügel 4 verbindet. Bei der mechanischen Ausführung des Mechanismus, wie in Figur 2 dargestellt, ist das Gegengewicht 8 mit dem Verbindungselement 12 und dem Vorflügel 4 verbunden. Der Mechanismus beinhaltet eine Zugfeder 9, die mit dem Gegengewicht 8 in mechanischer Verbindung steht. Das Gegengewicht 8 ist in diesem Ausführungsbeispiel über zusätzliche Lager 10, die beispielsweise als Gleitlager ausgebildet sein können, in dem Hohlraum 15 eines Gestänges oder einem Rohr 15 geführt. Durch die zusätzliche Führung der Lager 10 wird eine lineare Bewegung ermöglicht. In dem Ausführungsbeispiel wird das Verbindungselement 12 über eine Umlenkeinrichtung 11 umgelenkt. Das Verbindungselement 12 kann beispielsweise ein Zahnriemen, ein (Draht-)Seil oder eine Kette sein. Die Umlenkeinrichtung 11 kann entsprechend eine Riemenscheibe, eine Umlenkrolle, ein Ritzel oder ähnliches aufweisen. Die Umlenkeinrichtung 11 in Figur 2 weist eine vertikale Lagerung 31 auf, um die sich die Umlenkeinrichtung 11 dreht.

Das Gegengewicht 8 kann auch aus einzelnen Bauteilen zusammengesetzt sein, so dass sich die Vertikal-Windkraftanlage 1 je nach Einsatzort und dortigen Windverhältnissen optimal einstellen lässt. Das Gegengewicht 8 kann aus verschiedenen Materialen oder gleichen Materialen aufgebaut sein. Vorzugsweise kommen Materialien mit einer hohen Dichte zum Einsatz, beispielsweise Stahl, besonders bevorzugt nicht rostender Stahl. Es kann für jeden Vorflügel ein eigenes Gegengewicht vorgesehen sein, wie dargestellt. Alternativ kann auch ein Gegengewicht mit zwei oder mehr Vorflügeln durch entsprechende Verbindungselemente und Umlenkeinrichtungen verbunden sein.

In dem dargestellten Ausführungsbeispiel ist der Hauptflügel 3 über ein Gestänge 15 mit der zentralen Welle 5 verbunden. Zudem ist der Hauptflügel 3 über das Gestänge 15 direkt mit einem zweiten Hauptflügel 3 derart verbunden, dass die beiden Hauptflügel 3 einen Doppelflügel bilden. Alternativ können zwei oder mehr Flügel separat voneinander jeweils direkt an der zentralen Welle 22 montiert sein.

In Figur 2 (linke Seite) ist ferner die ausgefahrene Position 18 des Vorflügels 4 in Bezug auf den Hauptflügel 3 dargestellt. Der nicht schraffiert dargestellte Vorflügel zeigt die eingefahrene Position 19 des Vorflügels 4. In der ausgefahrenen Position 18 des Flügels 2 weist der Flügel 2 die größte aerodynamisch wirksame Gesamtfläche auf. Die wirksame Gesamtfläche des Flügels 2 setzt sich aus der wirksamen Fläche des Hauptflügels 3 und der wirksamen Fläche des Vorflügels 4 zusammen. Die aerodynamisch wirksame Fläche bezeichnet dabei die Fläche, an der der Wind angreifen kann bzw. welche maßgeblich dazu beiträgt, dass die Windenergie geerntet werden kann. Eine größere aerodynamisch wirksame Gesamtfläche geht in der Regel mit einem größeren Strömungswiderstand der Flügel einher. Durch die große wirksame Gesamtfläche bzw. Angriffsfläche für den Wind bei ausgefahrener Position 18 der Vorflügel ist der erfindungsgemäße Vertikal-Windgenerator dazu geeignet, auch bei niedrigen Windgeschwindigkeiten anzulaufen und auch bei niedrigen Windgeschwindigkeiten effektiv betrieben zu werden bzw. effektiv Wind zu ernten. Bei höheren Windgeschwindigkeiten werden aufgrund der dann wirksamen höheren Zentrifugalkraft auf die Gegengewichte 8 die beiden Vorflügel 4 gegen die Kraft der beiden Druckfedern 14 an die Hauptflügel 3 herangezogen, so dass sich die aerodynamisch wirksame Gesamtfläche entsprechend verkleinert. Dadurch wird der Wirkungsgrad bei hohen Windgeschwindigkeiten optimiert bzw. wird es ermöglicht, den Windgenerator auch bei sehr hohen Windgeschwindigkeiten zu betreiben. Bei nachlassendem Wind und entsprechend kleineren Rotationsgeschwindigkeiten überwiegt die Druckkraft der Druckfedern 14 die dann auftretende Zentrifugalkraft und drückt somit die Vorflügel 4 wieder von den Hauptflügel 3 weg bzw. auf Abstand. Gleichzeitig werden die beiden Zugfedern 9 über das Zugelement 12 gedehnt. Die beiden Zugfedern 9 dienen dabei der dynamischen Stabilisierung des Systems zur Vermeidung von Schwingungen oder Überempfindlichkeit des Gesamtsystems. Aufgrund des Kräftegleichgewichts zwischen Zentrifugalkraft und Druckkraft der Druckfeder kann grundsätzlich in Abhängigkeit der auftretenden Windgeschwindigkeit jede Zwischenposition eingenommen werden.

Um einen möglichst großen Effekt zu erzielen, erstreckt sich der Vorflügel 4 bevorzugt über mindestens 50%, stärker bevorzugt mindestens 70% und besonders bevorzugt mindestens 90% der Länge des Hauptflügels (d.h. in Richtung senkrecht zur Zeichenebene). Es ist ferner bevorzugt, dass die Projektion des Vorflügels 4 (in Figur 2 mit b bezeichnet) auf die Breite des Hauptflügels 3 (in Figur 2 mit b_{g} bezeichnet) mindestens 50%, stärker bevorzugt mindestens 70% und besonders bevorzugt mindestens 90% der Breite des Hauptflügels beträgt.

Bei einer weiteren vorzugsweisen Ausführungsform kann der Mechanismus einen Elektromotor beinhalten, wobei der Elektromotor über das Verbindungselement 12 mit dem Vorflügel 4 verbunden sein kann. Dieser Aufbau kann ebenfalls mit mechanischen Komponenten, wie beispielsweise einer Druckfeder, zusammenwirken. Eine Steuerung berechnet die optimale Position des Vorflügels 4 anhand von (Wind-)Daten bzw. entsprechenden Kenngrößen. Ein Elektromotor bewegt die Vorflügel 4 in die entsprechend errechnete Position, die sich je nach Windgeschwindigkeit in einer ausgefahrenen Position 18 oder eingefahren 19 Position oder in einer dazwischen liegenden Position befindet. Die Steuerung beruht vorteilhaft auf Daten, wie sie beispielsweise ein Windmesser 33 (Figur 1) liefert oder auch auf (Wetter-)Daten, die beispielsweise im Internet zur Verfügung gestellt werden. Der Elektromotor kann vorteilhaft auch als Linearmotor ausgebildet sein. Vorteilhaft wird der Elektromotor mit der geernteten Windenergie betrieben.

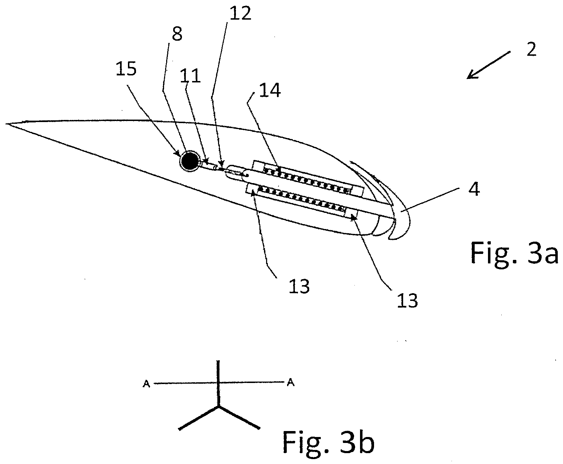

Ferner ist in Figur 3b eine schematische Darstellung einer weiteren bevorzugten Ausführungsform eines Vertikal-Windgenerators 1 von oben gezeigt. Der dort gekennzeichnete Schnitt A-A gibt die Position des in Fig. 3a gezeigten Schnittes durch einen Hauptflügel 3 einer weiteren bevorzugen Ausführungsform an. Wie in diesem schematischen Schnittbild gezeigt, erstrecken sich die Flügel in diesem Ausführungsbeispiel nicht vertikal (wie in Figur 1), sondern horizontal, d.h. die drei Hauptflügel erstrecken sich von einer zentralen Welle radial nach außen. Bei diesem Ausführungsbeispiel funktioniert der Mechanismus zur selbsttätigen Bewegung des Vorflügels 4 gegenüber dem Hauptflügel 3 analog zu jenem der Ausführungsform der Figur 2. Jedoch ist bei dieser Ausführungsform vorteilhaft das Gegengewicht 8 in den Hauptflügel 3 integriert, da die Zentrifugalkraft hier entlang der Längsachse des Hauptflügels wirkt. Da auch in diesem Fall die Bewegungsrichtung des Vorflügels im wesentlichen senkrecht auf der Richtung der Zentrifugalkraft steht, ist bevorzugt eine Umlenkeinrichtung wie oben beschrieben vorgesehen. Auch die Kombination aus Druckfeder und Zugfeder können bei dieser Ausführungsform zum Einsatz kommen. Bevorzugt ist der gesamte Mechanismus, der oben in Bezug auf die Figur 2 beschrieben wurde, im Hauptflügel 3 dieser Ausführungsform untergebracht. Dies kann unter anderem Vorteile bei der Montage eines entsprechenden Vertikal-Windgenerators 1 haben. Ähnlich der Ausführungsform gemäß Figur 2 kann auch bei dieser Ausführungsform der Mechanismus mechanisch oder mit einem Elektromotor ausgebildet sein.

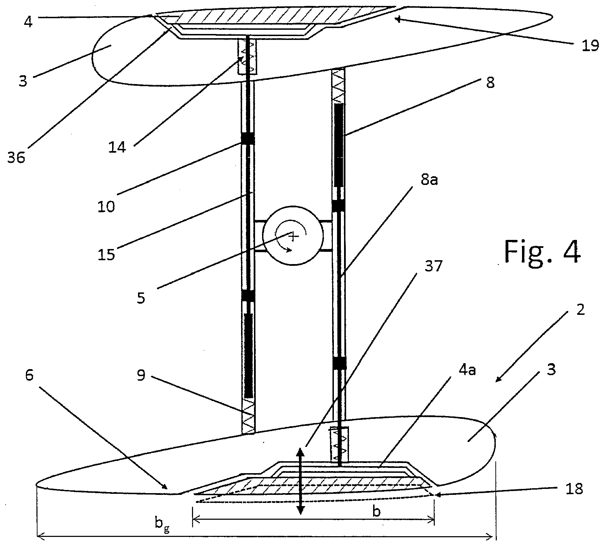

Figur 4 zeigt eine weitere bevorzugte Ausführungsform des erfindungsgemäßen Vertikal-Windgenerators. Dieses Ausführungsbeispiel entspricht in Grundzügen den oben diskutierten erfindungsgemäßen Ausführungsformen des Vertikal-Windgenerators mit mindestens zwei Flügeln 2, die bezüglich einer zentralen vertikalen Drehachse drehbar gelagert sind, wobei die Flügel 2 jeweils einen Hauptflügel 3 mit einer Längsseite 6, die der Außenseite des Hauptflügels 3 entspricht, und einen an der Längsseite 6 des Hauptflügels 3 angebrachten Vorflügel 4 aufweisen, wobei der Vorflügel 4 jeweils in Bezug auf den Hauptflügel 3 zwischen einer ersten und einer zweiten Position beweglich ist. Der Vorflügel 4 ist in einer eingefahrenen Position 19 dargestellt. Vorzugsweise ist der Vorflügel 4 an mindestens einer Seite, bevorzugt an Vorder- und Rückseite, angeschrägt bzw. spitz zulaufend ausgebildet, so dass die Aerodynamik des Vorflügels 4 verbessert wird.

Die Außenseite bezeichnet dabei die Seite des Flügels 2, die von einer zentralen vertikalen Welle 5 abgewandt liegt. Der Vorflügel 4 bewegt sich bei diesem Ausführungsbeispiel in einer Wirkrichtung bzw. entlang derselben Achse wie das Gegengewicht 8. Durch diese bevorzugte Anordnung bedarf es keiner Umlenkung mit Hilfe einer Umlenkeinrichtung 11 und eines flexiblen Verbindungselements 12 wie in Figur 2. Stattdessen erfolgt die Verbindung zwischen Vorflügel 4 und Gegengewicht 8 bevorzugt mit Hilfe einer starren Verbindung, beispielsweise mit Hilfe eines Gestänges 8a. Dadurch können Umlenkverluste im Verbindungsmechanismus minimiert werden. Die indirekte Anbindung über das Tragelement 4a ist dabei lediglich beispielhaft.

Auch hier drückt die Druckfeder 14 den Vorflügel 4 nach außen, wenn keine Zentrifugalkraft auf das Gegengewicht 8 wirkt, welche den Vorflügel dann gegen die Druckkraft der Druckfeder 14 nach innen bewegt. Die zusätzliche, optionale Zugfeder 9 dient der dynamischen Stabilisation. Bei diesem Ausführungsbeispiel können wegen des starren Gestänges 8a Zugfeder 9 und Druckfeder 8 auch miteinander vertauscht werden.

Das Gestänge 8a wird über Lager 10 zusammen mit dem Gegengewicht 8 in dem Gestänge 15 mit Hohlraum geführt. Das Gestänge 15 ist mit der Welle 5 verbunden. Die Welle 5 treibt direkt oder indirekt (zwischengeschaltetes Getriebe) einen Generator zur Stromgewinnung an (nicht dargestellt). In Figur 4 ist der Vorflügel 4 in der ausgefahrenen Position 18 gestrichelt dargestellt. Die Bewegungsrichtung des Vorflügels 4 ist schematisch mit Pfeil 37 dargestellt. Die Bewegung des Vorflügels 4 ist in diesem Ausführungsbeispiel vorteilhaft im Wesentlichen senkrecht zur Außenseite bzw. zur Längsseite 6 des Flügels 2. Die Aussparung 36 im Hauptflügel 3 erlaubt es, den Vorflügel 4 an der Längsseite 6 komplett in den Hauptflügel 3 zu integrieren. Aussparungen 36 können auch bei weiteren erfindungsgemäßen Ausführungsformen vorteilhaft sein. Es kann auch vorteilhaft vorgesehen sein, einen Vorflügel 4 an der Außenseite dem Konturverlauf des Hauptflügels 3 anzupassen.

Bei dem in der Figur 4 dargestellten erfindungsgemäßen Ausführungsbeispiel eines Vertikal-Windgenerator 1 ist es weiterhin vorteilhaft, dass sich der Vorflügel 4 über 10% bis 60%, bevorzugt über 30% bis 50% der Länge des Hauptflügels erstreckt. Es ist ferner bevorzugt, dass die Projektion des Vorflügels 4 (in Figur 4 mit b bezeichnet) auf die Breite des Hauptflügels 3 (in Figur 4 mit b_{g} bezeichnet) mindestens 30%, stärker bevorzugt mindestens 50% und besonders bevorzugt mindestens 70% der Breite des Hauptflügels beträgt.

Das in Figur 4 gezeigt Ausführungsbeispiel kann statt mit einem mechanischen Mechanismus auch mit einem Elektromotor zur Verstellung der Position des Vorflügels 3 ausgeführt sein.

Die Merkmale der verschiedenen erfindungsgemäßen Ausführungsformen können auch miteinander kombiniert werden, beispielsweise kann auch der Mechanismus des in Figur 4 dargestellten Ausführungsbeispiels in den Hauptflügel des Windgenerators gemäß den anderen Ausführungsformen integriert werden.

## Patentansprüche

1. Vertikal-Windgenerator mit mindestens zwei Flügeln, die bezüglich einer zentralen vertikalen Drehachse drehbar gelagert sind, wobei die Flügel jeweils einen Hauptflügel mit einer Längsseite und einen an der Längsseite des Hauptflügels angebrachten Vorflügel aufweisen, wobei der Vorflügel jeweils in Bezug auf den Hauptflügel zwischen einer ersten und einer zweiten Position beweglich ist, wobei der Vertikal-Windgenerator einen mechanischen, automatischen Mechanismus aufweist, der dazu geeignet ist, die Vorflügel in Bezug auf die Hauptflügel zwischen der ersten und der zweiten Position zu bewegen, wobei der Mechanismus dazu ausgelegt ist, die Vorflügel in Abhängigkeit von der Winkelgeschwindigkeit der Flügel bei steigenden Windgeschwindigkeiten auf den Hauptflügel zuzubewegen und bei abnehmenden Windgeschwindigkeiten vom Hauptflügel weg zu bewegen.

2. Vertikal-Windgenerator nach Anspruch 1, wobei sich der Vorflügel über mindestens 50%, bevorzugt mindestens 70% und besonders bevorzugt mindestens 90% der Länge der Längsseite des Hauptflügels erstreckt.

3. Vertikal-Windgenerator nach einem der vorhergehenden Ansprüche, wobei die Bewegung zwischen der ersten und der zweiten Position kontinuierlich erfolgt.

4. Vertikal-Windgenerator nach einem der vorhergehenden Ansprüche, wobei die Vorflügel in Abhängigkeit von der Windgeschwindigkeit verschiedene Zwischenpositionen, bevorzugt jede beliebige Zwischenposition, zwischen der ersten und der zweiten Position, einnehmen können.

5. Vertikal-Windgenerator nach einem der vorhergehenden Ansprüche, wobei der Mechanismus auf Fliehkraft beruht.

## Claims

1. A vertical wind generator having at least two blades which are rotatably mounted with regard to a central vertical rotation axis, wherein the blades each comprise a main blade with a longitudinal side and a fore blade attached to the longitudinal side of the main blade, wherein the fore blade is movable between a first position and a second position each with regard to the main blade, wherein the vertical wind generator comprises a mechanical, automatic mechanism which is adapted to move the fore blades between the first and the second position with regard to the main blades, wherein the mechanism is adapted to move the fore blades toward the main blade at increasing wind speeds and to move the fore blades away from the main blade at decreasing wind speeds depending on the angular speed of the blades.

2. The vertical wind generator according to claim 1, wherein the fore blade extends over at least 50%, preferably at least 70%, and particularly preferably at least 90% of the length of the longitudinal side of the main blade.

3. The vertical wind generator according to any one of the preceding claims, wherein the movement between the first and the second position is carried out continuously.

4. The vertical wind generator according to any one of the preceding claims, wherein the fore blades may take different intermediate positions depending on the wind speed, preferably each intermediate position between the first and the second position.

5. The vertical wind generator according to any one of the preceding claims, wherein the mechanism is based on centrifugal force.

## Revendications

1. Eolienne verticale comprenant au moins deux pales qui sont montées de manière à pouvoir tourner par rapport à un axe de rotation vertical central, les pales présentant chacune une voilure principale pourvue d'un côté longitudinal et un bec de bord d'attaque monté sur le côté longitudinal de la voilure principale, le bec de bord d'attaque étant mobile respectivement par rapport à la voilure principale entre une première et une deuxième position, l'éolienne verticale présentant un mécanisme automatique mécanique qui est adapté à déplacer les becs de bord d'attaque par rapport aux voilures principales entre la première et la deuxième position, le mécanisme étant conçu pour rapprocher les becs de bord d'attaque de la voilure principale lorsque les vitesses de vent augmentent et pour les éloigner de la voilure principale lorsque les vitesses de vent diminuent, en fonction de la vitesse angulaire des pales.

2. Eolienne verticale selon la revendication 1, le bec de bord d'attaque s'étendant sur au moins 50 %, de préférence sur au moins 70 % et de manière particulièrement préférée sur au moins 90 % de la longueur du côté longitudinal de la voilure principale.

3. Eolienne verticale selon l'une quelconque des revendications précédentes, le déplacement entre la première et la deuxième position s'effectuant en continu.

4. Eolienne verticale selon l'une quelconque des revendications précédentes, les becs de bord d'attaque pouvant occuper différentes positions intermédiaires, de préférence n'importe quelle position intermédiaire, entre la première et la deuxième position, en fonction de la vitesse du vent.

5. Eolienne verticale selon l'une quelconque des revendications précédentes, le mécanisme reposant sur la force centrifuge.
